(19) Europäisches Patentamt / European Patent Office / Office européen des brevets

(11) EP 1 717 241 B1

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(51) Int Cl.:
***C07F 7/12*** *(2006.01)*

(21) Anmeldenummer: **06006798.0**

(22) Anmeldetag: **30.03.2006**

(54) **Verfahren zur Herstellung von Organylhydrogensilanen**

Process for preparing organohydrongenosilanes

Procédé de préparation d'organosilanes hydrogénés

(84) Benannte Vertragsstaaten:
**DE FR GB**

(30) Priorität: **26.04.2005 DE 102005019252**

(43) Veröffentlichungstag der Anmeldung:
**02.11.2006 Patentblatt 2006/44**

(73) Patentinhaber: **Wacker Chemie AG**
**81737 München (DE)**

(72) Erfinder: **Geisberger, Gilbert, Dr.**
**84503 Altötting (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 776 698**
**DE-A1- 2 132 335**
**US-A- 4 605 543**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Organylhydrogensilanen über eine Komproportionierungsreaktion.

Der Bedarf an Organylhydrogensilanen, insbesondere an Methyldichlorsilan und Dimethylchlorsilan, ist wesentlich höher als der Anfall als Nebenprodukte bei der Direktsynthese beim Müller-Rochow-Prozess.

Komproportionierungsreaktionen von Organylchlorsilanen mit Hydrogenchlorsilanen zu Organylhydrogenchlorsilanen mit Lewissäuren als Katalysatoren sind beschrieben in WO 99/31111. Das Verfahren ist wenig selektiv und es werden viele Nebenprodukte gebildet. Das bevorzugte $AlCl_3$ ist flüchtig und sublimiert. Da Inhibitoren als Zusatzstoffe notwendig sind, werden diese im Destillationskreislauf zugesetzt.

In der DE 19520737 A wird die Komproportionierungsreaktion zu Organylhydrogenchlorsilanen mit HCl-gesättigten Katalysatoren auf Zr/Al-Oxid-Basis durchgeführt. Es werden hohe Reaktionstemperaturen angewendet. Dies führt zu hohem Energieeinsatz und aufgrund der geringeren Selektivität zu mehr Abfallprodukten.

DE 2132335 A beschreibt die Reaktion von Methyltrichlorsilan und Dichlorsilan zu Methyldichlorsilan in Gegenwart von Hydrochloriden tertiärer Amine als Katalysatoren. Die katalytische Aktivität ist gering und die Nebenreaktion des Produktes Methyldichlorsilan mit der im Katalysator vorhandenen HCl zu Methyltrichlorsilan und Wasserstoff führt zu Ausbeuteverlusten.

In DE 1264442 A sind Komproportionierungsreaktionen von Silanen mit quaternären Ammonium- und Phosphoniumsalzen, jedoch kein gezieltes Verfahren zur Herstellung von Organylhydrogenchlorsilanen beschrieben.

US 4605543 A beschreibt Komproportionierungsreaktionen ausgehend von Methyldichlorsilan mit quaternären Ammonium- und Phosphoniumsalzen.

In EP 776698 A ist ein Verfahren beschrieben, bei dem in einer Komproportionierungsreaktion der Wasserstoff auf die Verbindung übertragen wird, deren Siliciumatom die größere Anzahl an organischen Substituenten trägt. Das "Hydriermittel" ist Methylsilan oder Methylchlorsilan, welches durch Disproportionierung von Methyldichlorsilan erzeugt wird.

Es bestand die Aufgabe, ein verbessertes Verfahren zur Herstellung von Organylhydrogensilanen bereitzustellen.

Gegenstand der Erfindung ist ein Verfahren zur Herstellung von Organylhydrogensilanen, bei dem eine Komproportionierungsreaktion, ausgewählt aus den Gleichungen (3), (4) und (5),

$$R_aSiCl_{4-a} + SiH_2Cl_2 \text{ -----> } R_aSiHCl_{3-a} + SiHCl_3 \qquad (3),$$

$$2\ R_aSiCl_{4-a} + SiH_3Cl \text{ -----> } 2\ R_aSiHCl_{3-a} + SiHCl_3 \qquad (4),$$

$$3\ R_aSiCl_{4-a} + SiH_4 \text{ -----> } 3\ R_aSiHCl_{3-a} + SiHCl_3 \qquad (5),$$

in Anwesenheit eines Katalysators, der mindestens eine vollständig organisch substituierte Ammonium- oder Phosphonium-Einheit enthält, durchgeführt wird, wobei

**R** ein gegebenenfalls halogensubstituierter Alkyl-, Aryl- oder Alkarylrest und
**a** die Werte 1, 2 oder 3 bedeuten.

$SiH_2Cl_2$, $SiH_3Cl$ und $SiH_4$ sind überraschenderweise als Hydriermittel einsetzbar.
Bei dem Verfahren entstehen durch unerwünschte Nebenreaktionen keine Abfälle, da die Katalysatoren selektiv den H/Cl-Austausch katalysieren.
Bei Kenntnis der bekannten Verfahren, welche die Umkehrreaktion beschreiben, ist die Ausbeute überraschend hoch. Die Energiekosten sind niedrig, da die Temperatur niedrig bleiben kann.

Beispiele für **R** sind Alkylreste, wie Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylrest wie der 2,2,4-Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste; Xylylreste und Ethylphenylreste und Aralkylreste, wie der Benzylrest, der $\alpha$- und $\beta$-Phenylethylrest; Halogenalkylreste, wie der Chlormethyl, 3-Chlorpropyl- und 3-Brompropylrest; Halogenarylreste, wie der o-, m-, p-Chlorphenyl- und Chlortolylrest.

Bevorzugt weist der Rest **R** 1 bis 18 Kohlenstoffatome, besonders bevorzugt 1 bis 6 Kohlenstoffatome auf. Insbesondere ist der Rest **R** ein Methyl- oder Phenylrest.

Besonders bevorzugt sind die Komproportionierungsreaktionen (6) und (7):

$MeSiCl_3 + SiH_2Cl_2$ -----> $MeSiHCl_2 + SiHCl_3$ (6),

3 $Me_2SiCl_2 + SiH_4$ -----> 3 $Me_2SiHCl + SiHCl_3$ (7).

Vorzugsweise werden in einer vorgeschalteten Reaktion $SiH_2Cl_2$, $SiH_3Cl$ und $SiH_4$ vorzugsweise in Gegenwart eines Katalysators durch Disproportionierung von $SiHCl_3$ hergestellt.
Als Summengleichung resultiert dann:

$R_aSiCl_{4-a} + SiHCl_3$ ------> $R_aSiHCl_{3-a} + SiCl_4$ (8).

Insbesondere bevorzugt wird in einer vorgeschalteten Reaktion $SiHCl_3$ disproportioniert und

$SiH_2Cl_2$ gemäß 2 $SiHCl_3 \rightarrow SiH_2Cl_2 + SiCl_4$ (9)

$SiH_3Cl$ gemäß 3 $SiHCl_3 \rightarrow SiH_3Cl + 2\ SiCl_4$ (10) bzw.

$SiH_4$ gemäß 4 $SiHCl_3 \rightarrow SiH_4 + 3\ SiCl_4$ (11)

erzeugt.
Als Summengleichungen resultieren dann:

$MeSiCl_3 + SiHCl_3$ -----> $MeSiHCl_2 + SiCl_4$ (12),

$Me_2SiCl_2 + SiHCl_3$ -----> $Me_2SiHCl + SiCl_4$ (13).

In der nicht erfindungsgemäßen direkten Umsetzung der Silane $R_aSiCl_{4-a}$ mit $SiHCl_3$ sind die gewünschten monohydrierten Silane $RaSiHCl_{3-a}$ nur in geringen Ausbeuten zugänglich (3,4 Mol-% bei $MeSiHCl_2$; < 1,0 Mol% bei $Me_2SiHCl$).

Bei der Direktsynthese von Methylchlorsilanen führt ein HCl-Zusatz zur Steigerung der Ausbeute an $MeSiHCl_2$ und unerwünschtem $MeSiCl_3$. Mit dem vorliegenden Verfahren kann der Anfall an $MeSiCl_3$ in $MeSiHCl_2$ überführt werden.

Das Reaktionsprodukt $SiCl_4$ kann zu feinteiliger Kieselsäure oder in einer gängigen Konvertierungsreaktion mit $H_2$ wieder zum Einsatzstoff $SiHCl_3$ verarbeitet werden.

Die vollständig organisch substituierten Ammonium- oder Phosphonium-Einheiten des geeigneten Katalysators sind vorzugsweise quaternäre Ammonium- und Phosphoniumsalze und positiv geladene Heterocyclen, die ein oder mehrere vollständig organisch substituierte Atome aufweisen, die ausgewählt werden aus Stickstoff- und Phosphoratomen. Bevorzugte positiv geladene Heterocyclen sind Imidazoliumsalze und Pyridiniumsalze.

Als Katalysatoren werden vorzugsweise verwendet:

(a) Quaternäre Ammoniumsalze der allgemeinen Formel $R^1_4NX^1$ und
(b) Quaternäre Phosphoniumsalze der allgemeinen Formel $R^2_4PX^2$,
wobei

**$R^1$** und **$R^2$** einen gegebenenfalls halogensubstituierten, gegebenenfalls Heteroatome enthaltenden Kohlenwasserstoffrest und

**$X^1$** und **$X^2$** ein Halogenatom bedeuten.

**$R^1$** und **$R^2$** können z. B. verzweigte, unverzweigte oder cyclische Alkylreste und Mehrfachbindungssysteme, wie Aryl-, Alkaryl-, sowie Aralkylreste, sein. Beispiele für **$R^1$** und **$R^2$** sind die für **R** aufgeführten Beispiele für gegebenenfalls halogensubstituierte Alkyl-, Aryl- oder Alkarylreste, sowie Aralkylreste, wie die o-, m-, und p-Phenylalkylreste.

Bevorzugt weisen die Reste **$R^1$** und **$R^2$** 1 bis 18 Kohlenstoffatome, besonders bevorzugt 1 bis 10 Kohlenstoffatome auf, insbesondere ist der Rest **$R^1$** und **$R^2$** ein Alkylrest mit 2 bis 8 Kohlenstoffatomen.

Das Halogenatom **$X^1$** und **$X^2$** ist vorzugsweise Chlor, Brom oder Iod, insbesondere Chlor.

Bevorzugt ist das quaternäre Phosphoniumsalz $(n\text{-Butyl})_3(n\text{-Octyl})PCl$. Die Herstellung derartiger homogener Katalysatoren durch Alkylierung tertiärer Phosphine mit Alkylhalogeniden ist beispielsweise beschrieben in Houben-Weyl, Georg Thieme Verlag, Band XII/1, S. 79-90; 1963.

Als Katalysatoren werden weiterhin vorzugsweise verwendet:

(c) Imidazoliumsalze der allgemeinen Formel

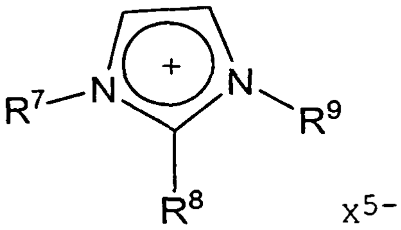

und

(d) Pyridiniumsalzen der allgemeinen Formel

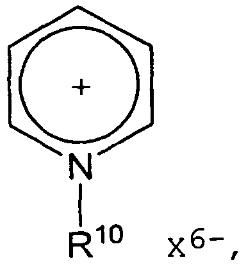

wobei
**$R^8$** Wasserstoff und die Bedeutungen von **$R^1$** und **$R^2$** aufweist,
**$R^7$, $R^9$** und **$R^{10}$** die Bedeutungen von **$R^1$** und **$R^2$** aufweisen und
**$X^5$** und **$X^6$** die Bedeutungen von **$X^1$** und **$X^2$** aufweisen;

Als Katalysatoren werden weiterhin vorzugsweise verwendet:

(e) Ionentauscher-Harze, die Gruppen aufweisen, welche ausgewählt werden aus quaternären Ammoniumsalzgruppen der allgemeinen Formel $R^3R^4{}_3NX^3$ und quaternären Phosphoniumsalzgruppen der allgemeinen Formel $R^5R^6{}_3PX^4$, welche über die zweiwertigen Gruppen **$R^3$** und **$R^5$** an das Ionentauscher-Harzgerüst gebunden sind, Imidazolium- und Pyridiniumgruppen, wobei

| | |
|---|---|
| **$R^3$** und **$R^5$** | zweiwertige Alkylreste mit 1 bis 20 Kohlenstoffatomen bedeuten, die unterbrochen sein können durch Gruppen -O-, -CO- oder -OCO-O- und |
| **$R^4$** und **$R^6$** | die Bedeutungen von **$R^1$** und **$R^2$** und |
| **$X^3$** und **$X^4$** | die Bedeutungen von **$X^1$** und **$X^2$** aufweisen. |
| **$R^3$** und **$R^5$** | weisen vorzugsweise 3 bis 10 Kohlenstoffatome auf. |

Das Ionentauscher-Harzgerüst kann ein beliebiges säurefestes organisches Harz sein. Bevorzugte Ionentauscher-Harzgerüste werden ausgewählt aus Epoxydharz, Polystyrol, Polyvinylchlorid, Polyacrylat und Polyamid.

Die Katalysatoren (e) können im Reaktionsmedium löslich oder unlöslich sein.

Als Katalysatoren werden weiterhin vorzugsweise verwendet:

(f) Heterogene Katalysatoren, die anorganische heterogene Träger umfassen, an deren Oberfläche Salze fixiert sind, welche ausgewählt werden aus den vorstehenden quaternären Ammoniumsalzen (a), quaternären Phosphoniumsalzen (b),

Imidazoliumsalzen (c) und Pyridiniumsalzen (d). Die Salze sind vorzugsweise physikalisch oder über koordinative Bindungen an der Oberfläche der heterogenen Träger fixiert.

Als Katalysatoren werden weiterhin vorzugsweise verwendet:

(g) Heterogene Katalysatoren, die anorganische heterogene Träger umfassen, an deren Oberfläche Gruppen fixiert sind, welche ausgewählt werden aus quaternären Ammoniumsalzgruppen der vorstehenden allgemeinen Formel

$R^3R^4{}_3NX^3$ und quaternären Phosphoniumsalzgruppen der allgemeinen Formel $R^5R^6{}_3PX^4$, welche über die zweiwertigen Gruppen $\mathbf{R^3}$ und $\mathbf{R^5}$ an den heterogenen Träger gebunden sind und Imidazolium- und Pyridiniumgruppen, welche über zweiwertige Gruppen an den heterogenen Träger gebunden sind. Die Salzgruppen sind über kovalente Bindungen an den heterogenen Träger gebunden.

Bevorzugte anorganische Träger werden ausgewählt aus Zeolithen, Tonen, porösem Glas, poröser Keramik, Silicaten, porösem Siliciumdioxid, wie gefällter und pyrogener Kieselsäure, porösem Aluminiumoxid und Aluminiumsilikaten .

Die heterogenen Katalysatoren (f) und (g) sind im Reaktionsmedium unlöslich. Die heterogenen Katalysatoren (f) und (g) können in feinverteilter Form, wie in Pulverform, oder als Formkörper vorliegen. Die Formkörper können in Form runder Platten, Rohre, Kugeln, Stäbe, Wabenkörpern und bevorzugt als Raschig-Ringe verwendet werden.

Die Herstellung von heterogenen Katalysatoren ist beispielsweise in EP 286074 A und EP 776698 A genannt.

Als Katalysatoren werden weiterhin vorzugsweise verwendet:

(h) Ionische Flüssigkeiten, nämlich niedrig schmelzende Salze von quaternären Ammonium-, quaternären Phosphonium-, Pyridinium- und Imidazoliumsalzen. Ihre bevorzugten Schmelzpunkte liegen für das vorliegende Verfahren bei 1 bar bei höchstens 150°C, bevorzugt höchstens 100°C, besonders bevorzugt höchstens 50°C.

Die Reste der Kationen der ionischen Flüssigkeiten entsprechen vorzugsweise den vorstehend beschriebenen Resten $\mathbf{R^1}$ und $\mathbf{R^2}$.

Die ionischen Flüssigkeiten werden bevorzugt als Metall- oder Übergangsmetallhalogenide eingesetzt. Zur Darstellung der Metall- oder Übergangsmetallhalogenide werden z. B. $MX_e$ mit M= Ga, Fe, Cu, Zn, In, Ti, Cd, Hg, B, Sn, Pb, Bi und X=Halogen verwendet. Es können aber auch andere Zusammensetzungen verwendet werden. Sie enthalten z. B. folgende Anionen: $AlCl_4^-$, $Al_2Cl_7^-$, $Al_3Cl_{10}^-$, $AlEtCl_3^-$, $Al_2Et_2Cl_5^-$, $BCl_4$ , $BF_4^-$, $BEt_3Hex^-$, $CuCl_2^-$, $Cu_2Cl_3^-$, $Cu_3Cl_4^-$, $SnCl_3^-$, $Sn_2Cl_5^-$, $PF_6^-$, $H_2PO_4^-$, $SbF_6^-$, $NO_3^-$, $HSO_4^-$, $CH_3SO_4^-$, $CF_3SO_3^-$, $(CF_3SO_2)_2N^-$.

Spezielle Beispiele für ionische Flüssigkeiten sind:

1-Ethyl-3-methyl-imidazoliumchlorid-Aluminiumchlorid (EMIMCL/$AlCl_3$)
1-Butyl-3-methyl-imidazoliumchlorid-Aluminiumchlorid (BMIMCL/$AlCl_3$.)
3-Methyl-N-butyl-pyridiniumchlorid-Aluminiumchlorid (3-MBPYCL/$AlCl_3$)
1-Butyl-pyridiumchlorid-Aluminiumchlorid (BPYCL/$AlCl_3$) Tetra-n-butylphosphoniumchlorid-Aluminiumchlorid (TB-PCL/$AlCl_3$).

Besonders bevorzugt sind Imidazoliumsalze.

Geeignete ionische Flüssigkeiten und deren Herstellung sind beispielsweise beschrieben in DE 10157198 A.

Es können reine ionische Flüssigkeiten (h) oder eine Mischung ionischer Flüssigkeiten eingesetzt werden oder Mischungen aus ionischen Flüssigkeiten (h) mit Salzen, die ausgewählt werden aus den Salzen (a), (b), (c) und (d). Die ionischen Flüssigkeiten (h) können auch gleichzeitig die Funktion eines Lösungsmittels oder Lösungsvermittlers für Salze, die ausgewählt werden aus den Salzen (a), (b), (c) und (d), einnehmen.

Die ionischen Flüssigkeiten werden vorzugsweise zu einem Anteil von 0,1 bis 80 Gewichtsprozent, insbesondere 1- 10 Gewichtsprozent in der Reaktionsmischung mit Silanen verwendet.

Die homogenen Katalysatoren (a), (b), (c) und (d) sind im Reaktionsmedium löslich. Diese Katalysatoren werden vorzugsweise in Reinsubstanz, gelöst in einem vorzugsweise hochsiedenden inerten organischen Lösungsmittel, vorzugsweise Kohlenwasserstoff, wie Tetralin oder Decalin, oder gelöst in Eduktsilan $R_aSiCl_{4-a}$, eingesetzt.

Die homogenen Katalysatoren haben den Vorteil, dass sie in Reinsubstanz oder gelöster Form pumpbar sind. Dadurch wird die Reaktionsführung einfacher, da der Katalysator auch während des bereits laufenden Verfahrens dosiert werden kann, d. h. bei Bedarf die Katalysatorkonzentration erhöht oder erniedrigt, der Katalysator erneuert oder auch gegen einen anderen homogenen Katalysator ohne Stillstandzeiten ausgetauscht werden kann.

Die Phosphonium- und Imidazolium-Katalysatoren zeichnen sich bei den erfindungsgemäßen Verfahren durch eine ausgezeichnete thermische Stabilität in den verschiedenen Organylchlorsilanmedien und durch eine hohe katalytische Aktivität bei den erfindungsgemäßen Komproportionierungsreaktionen aus.

Das erfindungsgemäße Verfahren kann absatzweise, halbkontinuierlich oder vollkontinuierlich durchgeführt werden. Vorzugsweise wird es vollkontinuierlich durchgeführt.

Eine bevorzugte kontinuierliche Verfahrensweise ist die Umsetzung der Silan-Komponenten in einem Reaktionsrohr, welches mit einem heterogenen Katalysator befüllt ist. Bei der homogenen Katalyse werden die Silan-Edukte zusammen mit dem Katalysator durch das Reaktionsrohr geleitet und anschließend der Katalysator destillativ abgetrennt und wieder zurückgeführt.

Besonders bevorzugt wird die erfindungsgemäße Komproportionierung kontinuierlich in einer Blasensäule

durchgeführt. Die Blasensäule enthält entweder den heterogenen oder homogenen Katalysator, die Silan-Edukte werden kontinuierlich zudosiert und die sich gebildeten Silane kontinuierlich abdestilliert. Vorteil dieses Verfahrens der homogenen Katalyse ist, dass keine nachträgliche Abtrennung und Rückführung des Katalysators notwendig ist.

Die Silan-Edukte werden in gasförmiger oder flüssiger Form oder gelöst in einem inerten organischen Lösungsmittel, insbesondere Kohlenwasserstoffe und Halogenkohlenwasserstoffe, wie Hexan, Toluol, Xylol oder Chlorbenzol, eingesetzt.

Bei einer bevorzugten homogenen Verfahrensweise wird das senkrecht stehende, vorzugsweise thermostatisierte Reaktionsrohr (Blasensäule) mit dem Katalysator befüllt und Silane der Formeln $R_aSiCl_{4-a}$ und $SiH_2Cl_2$, $SiH_3Cl$ oder $SiH_4$ bei einem Druck von vorzugsweise 0,1 bis 20 bar, bevorzugt 1 bis 3 bar und einer Temperatur von vorzugsweise 0 bis 250°C, bevorzugt 50 bis 150°C, eingeleitet.

Das Edukt-Molverhältnis $SiH_2Cl_2$, $SiH_3Cl$ oder $SiH_4/R_aSiCl_{4-a}$ beträgt bevorzugt 0,1 bis 10, besonders bevorzugt 0,2 bis 2,0. Die KatalysatorKonzentration bezogen auf die Gesamtmenge an eingesetzten Silanen beträgt vorzugsweise 0,1 bis 80 Gew.-%, bevorzugt 2 bis 60 Gew.-%, besonders bevorzugt 5 bis 20 Gew.-%.

Bei der bevorzugten Herstellung von SiH-haltigen Organylchlorsilanen mit niedrigen Siedepunkten, z. B. $Me_2SiHCl$ oder $MeSiHCl_2$, destillieren die Silane aus dem Reaktionsrohr (Füllstand bleibt konstant), das Reaktionsgemisch wird kondensiert und anschließend durch fraktionierte Detillation aufgetrennt. Bei Organylchlorsilanen mit höheren Siedepunkten wird das Reaktionsgemisch vorzugsweise an einem Überlauf im oberen Reaktorteil abgenommen. Der Katalysator wird dadurch mit ausgeschleust und vorzugsweise destillativ von der Silan-Mischung abgetrennt und zurückgeführt.

Bei einer zweiten bevorzugten Verfahrensvariante wird der heterogene Katalysator in einem Fest- oder Wirbelbett oder vorzugsweise als Formkörper vorliegend in einem thermostatisierten Rohr eingesetzt. Bei der Anordnung des Katalysators als Formköper werden die Silane der Formeln $R_aSiCl_{4-a}$ und $SiH_2Cl_2$, $SiH_3Cl$ oder $SiH_4$ bei einem Druck von vorzugsweise 0,1 bis 20 bar, bevorzugt 1 bis 3 bar und einer Temperatur von vorzugsweise 0 bis 250°C, bevorzugt 100 bis 150°C, eingeleitet.

Das Edukt-Molverhältnis $SiH_2Cl_2$, $SiH_3Cl$ oder $SiH_4/R_aSiCl_{4-a}$ beträgt bevorzugt 0,1 bis 10, besonders bevorzugt 0,2 bis 2,0. Das erhaltene Reaktionsgemisch wird anschließend vorzugsweise durch fraktionierte Destillation aufgetrennt. Durch Wahl eines geeigneten Eduktverhältnisses $SiH_2Cl_2$, $SiH_3Cl$ oder $SiH_4/R_aSiCl_{4-a}$ kann das als Zielprodukt gewünschte monohydrierte Silan $R_aSiHCl_{3-a}$ in hohen Ausbeuten erhalten werden.

Die Verbindungen der Formel $R_aSiHCl_{3-a}$, insbesondere die SiH-haltigen Organylchlorsilane, sind wertvolle Ausgangsverbindungen.zur Herstellung von funktionellen Silanen oder Siloxanen, die über eine Hydrosilylierungsreaktion mit aliphatischen Doppel- oder Dreifachbindungen aufweisenden organischen Verbindungen erhalten werden. Eine weitere Verwendung von beispielsweise Dimethylchlorsilan ist die Herstellung von Dimethylhydrogensilylgruppen aufweisenden Organopolysiloxanen, die bei additionsvernetzenden Siliconkautschuk-Zusammensetzungen eingesetzt werden.

Auch das als Nebenprodukt, hauptsächlich bei der Disproportionierung von Trichlorsilan, anfallende Tetrachlorsilan kann auf wirtschaftliche Weise verwertet werden, beispielsweise zur Herstellung von durch Flammenhydrolyse erzeugter, hochdisperser Kieselsäure. Tetrachlorsilan kann auch mit Wasserstoff wieder zu Trichlorsilan hydriert werden, so dass der Kreislauf geschlossen ist:

In Summe ergibt sich dann die Gleichung:

$$H_2 + R_aSiCl_{4-a} \text{ -----> } R_aSiHCl_{3-a} + HCl$$

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

**Beispiel 1:**

Ein senkrecht stehendes, beheizbares Rohr aus V4A-Stahl, einem Innendurchmesser von 5 cm und einer Gesamtlänge von 250 cm, wurde mit V4A-Stahl-Interpak-10-Füllkörpern befüllt. Als Katalysator bei der folgenden Umsetzung wurde $MeOctyl_3NCl$ in Form einer 3 %igen Lösung in $MeSiCl_3$ eingesetzt.

Bei einem Gesamtdruck von 2,2 bar (abs.) und einer Innentemperatur von 70°C dosierte man in das untere Ende der Reaktionssäule kontinuierlich 1000 g/h der $MeSiCl_3/MeOctyl_3NCl$-Lösung und 650 g/h $SiH_2Cl_2$.

Bei der Säulenhöhe von ca. 200 cm wurde das Produktgemisch flüssig abgenommen und $^1H$-NMR-spektroskopisch ($SiCl_4$ über GC) die Zusammensetzung bestimmt.

| | |
|---|---|
| $MeSiH_2Cl$ | 0,6 Mol-% |
| $MeSiHCl_2$ | 26,6 Mol-% |
| $MeSiCl_3$ | 23,5 Mol-% |
| $SiH_4$ | 1,6 Mol % |
| $SiH_3Cl$ | 2,4 Mol-% |
| $SiH_2Cl_2$ | 17,1 Mol-% |
| $SiHCl_3$ | 21,9 Mol-% |
| $SiCl_4$ | 6,0 Mol-% |

Der Umsatz des eingesetzten $MeSiCl_3$ zu $MeSiHCl_2$ betrug 52 %. Das Produktgemisch wurde destillativ aufgearbeitet.

**Beispiel 2:**

In einem senkrecht stehenden, beheizbaren Rohr aus V4A-Stahl, einem Innendurchmesser von 5 cm und einer Gesamtlänge von 250 cm, in der oberen Hälfte befüllt mit V4A-Stahl-Interpak-10-Füllkörpern, wurden 100 g 1-Butyl-3-methyl-imidazoliumchlorid vorgelegt und $MeSiCl_3$ bis zu einer Füllhöhe von 150 cm in den Reaktor gepumpt. Bei einem Gesamtdruck von 2 bar und einer Innentemperatur von 80°C wurden in das untere Ende des Reaktors kontinuierlich 150 g/h $SiH_2Cl_2$ und 500 g/h $MeSiCl_3$ dosiert. Die Füllhöhe der Blasensäule wurde durch Regelung der Innentemperatur konstant gehalten und das am Kopf des Reaktors anfallende Produktgemisch kondensiert und $^1H$-NMR-spektroskopisch ($SiCl_4$ über GC) die Zusammensetzung bestimmt.

| | |
|---|---|
| $MeSiH_2Cl$ | 0,1 Mol-% |
| $MeSiHCl_2$ | 20,3 Mol-% |
| $MeSiCl_3$ | 48,4 Mol-% |
| $SiH_4$ | 0,5 Mol % |
| $SiH_3Cl$ | 2,0 Mol-% |
| $SiH_2Cl_2$ | 8,1 Mol-% |
| $SiHCl_3$ | 18,2 Mol-% |
| $SiCl_4$ | 2,5 Mol-% |

Dieses Silangemisch wurde destillativ weiter aufgearbeitet. Der Reaktor konnte über einen Zeitraum von 3 Monaten betrieben werden, ohne dass eine Abnahme der katalytischen Aktivität festgestellt werden konnte.

**Beispiel 3:**

Ein senkrecht stehender, beheizbarer Reaktor aus V4A-Stahl, mit einem Innendurchmesser von 40 cm und einer Gesamtlänge von 500 cm wurde bis zu einer Höhe von 200 cm mit V4A-Pallringen (1 Zoll = 2,54 cm) befüllt.

Als Katalysator wurden 100 kg $Bu_4PCl$ in Form einer 30 %igen Mischung mit $MeSiCl_3$ im Reaktor vorgelegt. Bei einem Gesamtdruck von 1,9 bar und einer Innentemperatur von 78°C wurden in das untere Ende des Reaktors kontinuierlich 40 kg/h Dichlorsilan-Gemisch (Zusammensetzung: 94,6 % $SiH_2Cl_2$, 2,0 % $SiHCl_3$, 2,9 % $SiH_3Cl$; hergestellt durch Disproportionierung von Trichlorsilan) und 150 kg/h $MeSiCl_3$ dosiert. Die Füllhöhe der Blasensäule wurde durch Regelung der Temperatur konstant gehalten und das am Kopf des Reaktors anfallende Produktgemisch wurde einer kontinuierlich betriebenen Destillationskolonne zugeführt. Am Kopf dieser Kolonne wurde $SiH_4$, $SiH_3Cl$, $MeSiH_2Cl$ sowie $SiH_2Cl_2$ gasförmig abgezogen und dem Reaktor zur weiteren Abreaktion zurückgeführt. Am unteren Ende der Kolonne wurden kontinuierlich 190 kg/h Silangemisch in flüssiger Form mit folgender Zusammensetzung abgezogen:

| | |
|---|---|
| $MeSiHCl_2$ | 25,2 Mol-% |
| $MeSiCl_3$ | 46,4 Mol-% |
| $SiH_2Cl_2$ | 1,5 Mol-% |
| $SiHCl_3$ | 22,2 Mol-% |
| $SiCl_4$ | 4,5 Mol-% |

Dieses Silangemisch wurde destillativ weiter aufgearbeitet, wobei $MeSiHCl_2$ in über 95 %iger Reinheit erhalten wurde.

## Patentansprüche

1. Verfahren zur Herstellung von Organylhydrogensilanen, bei dem eine Komproportionierungsreaktion, ausgewählt aus den Gleichungen (3), (4) und (5),

$$R_aSiCl_{4-a} + SiH_2Cl_2 \text{ -----> } R_aSiHCl_{3-a} + SiHCl_3 \quad (3),$$

$$2\ R_aSiCl_{4-a} + SiH_3Cl \text{ -----> } 2\ R_aSiHCl_{3-a} + SiHCl_3 \quad (4),$$

$$3\ R_aSiCl_{4-a} + SiH_4 \text{ -----> } 3\ R_aSiHCl_{3-a} + SiHCl_3 \quad (5),$$

in Anwesenheit eines Katalysators, der mindestens eine vollständig organisch substituierte Ammonium- oder Phosphonium-Einheit enthält, durchgeführt wird, wobei

**R** ein gegebenenfalls halogensubstituierter Alkyl-, Aryl- oder Alkarylrest und
**a** die Werte 1, 2 oder 3 bedeuten.

2. Verfahren nach Anspruch 1, bei dem der Rest R ein Methylrest ist.

3. Verfahren nach Anspruch 1 oder 2, bei dem der Katalysator ausgewählt wird aus:

(a) Quaternären Ammoniumsalzen der allgemeinen Formel $R^1_4NX^1$,
(b) Quaternären Phosphoniumsalzen der allgemeinen Formel $R^2_4\ PX^2$,
(c) Imidazoliumsalzen der allgemeinen Formel

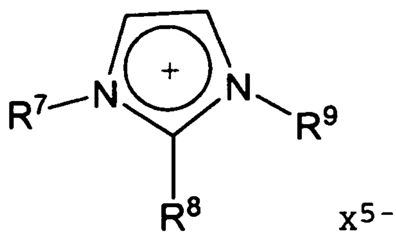

und
(d) Pyridiniumsalzen der allgemeinen Formel

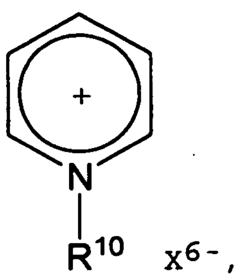

wobei

**$R^1$, $R^2$, $R^7$, $R^9$** und **$R^{10}$** einen gegebenenfalls halogensubstituierten, gegebenenfalls Heteroatome enthaltenden Kohlenwasserstoffrest aufweisen,

**$R^8$** Wasserstoff und die Bedeutungen von **$R^1$, $R^2$, $R^7$, $R^9$** und **$R^{10}$** aufweist und
**$X^1$, $X^2$, $X^5$** und **$X^6$** ein Halogenatom bedeuten;

(e) Ionentauscher-Harzen, die Gruppen aufweisen, welche ausgewählt werden aus quaternären Ammoniumsalzgruppen der allgemeinen Formel $R^3R^4{}_3NX^3$ und quaternären Phosphoniumsalzgruppen der allgemeinen Formel $R^5R^6{}_3PX^4$, welche über die zweiwertigen Gruppen **$R^3$** und **$R^5$** an das Ionentauscher-Harzgerüst gebunden sind, und Imidazoliumsalz-Gruppen, wobei

**$R^3$** und **$R^5$** zweiwertige Alkylreste mit 1 bis 20 Kohlenstoffatomen bedeuten, die unterbrochen sein können durch Gruppen -O-, -CO- oder -OCO-O- und
**$R^4$** und **$R^6$** die Bedeutungen von **$R^1$** und **$R^2$** und
**$X^3$** und **$X^4$** die Bedeutungen von **$X^1$** und $X^2$ aufweisen;

(f) Heterogenen Katalysatoren, die anorganische heterogene Träger umfassen, an deren Oberfläche Salze fixiert sind, welche ausgewählt werden aus den vorstehenden quaternären Ammoniumsalzen (a), quaternären Phosphoniumsalzen (b), Imidazoliumsalzen (c) und Pyridiniumsalzen(d);
(g) Heterogenen Katalysatoren, die anorganische heterogene Träger umfassen, an deren Oberfläche Gruppen fixiert sind, welche ausgewählt werden aus quaternären Ammoniumsalzgruppen der vorstehenden allgemeinen Formel $R^3R^4{}_3NX^3$ und quaternären Phosphoniumsalzgruppen der allgemeinen Formel $R^5R^6{}_3PX^4$, welche über die zweiwertigen Gruppen **$R^3$** und **$R^5$** an den heterogenen Träger gebunden sind und Imidazolium- und Pyridiniumgruppen, welche über zweiwertige Gruppen an den heterogenen Träger gebunden sind;
(h) Ionischen Flüssigkeiten, nämlich niedrig schmelzenden Salzen von quaternären Ammonium-, quaternären Phosphonium-, Pyridinium- und Imidazoliumsalzen.

**4.** Verfahren nach Anspruch 1 bis 3, bei dem die Komproportionierung kontinuierlich in einem Rohrreaktor oder in einer Blasensäule durchgeführt wird.

## Claims

**1.** Process for the preparation of organylhydrogen-silanes, in which a comproportionation reaction, selected from the equations (3), (4) and (5),

$$R_aSiCl_{4-a} + SiH_2Cl_2 \text{------>} R_aSiHCl_{3-a} + SiHCl_3 \quad (3),$$

$$2\ R_aSiCl_{4-a} + SiH_3Cl \text{----->} 2\ R_aSiHCl_{3-a} + SiHCl_3 \quad (4),$$

$$_3\ R_aSiCl_{4-a} + SiH_4 \text{------->} 3\ R_aSiHCl_{3-a} + SiHCl_3 \quad (5),$$

is carried out in the presence of a catalyst which contains at least one completely organically substituted ammonium or phosphonium unit, where

**R** is an optionally halogen-substituted alkyl, aryl, or alkaryl radical and
**a** has the values 1, 2 or 3.

**2.** Process according to Claim 1, in which the radical **R** is a methyl radical.

**3.** Process according to Claim 1 or 2, in which the catalyst is selected from:

(a) quaternary ammonium salts of the general formula $R^1{}_4NX^1$,
(b) quaternary phosphonium salts of the general formula $R^2{}_4PX^2$,
(c) imidazolium salts of the general formula

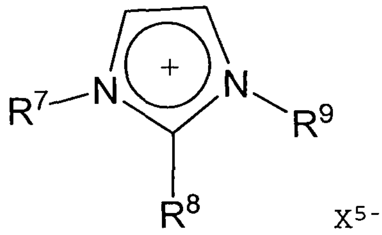

and

(d) pyridinium salts of the general formula

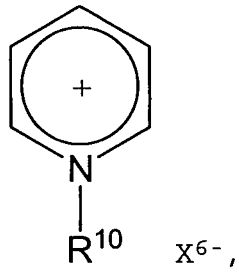

in which

**$R^1$, $R^2$, $R^7$, $R^9$** and **$R^{10}$** have an optionally halogen-substituted hydrocarbon radical optionally containing heteroatoms,
**$R^8$** is hydrogen and has the meanings of **$R^1$, $R^2$, $R^7$, $R^9$** and **$R^{10}$** and
**$X^1$, $X^2$, $X^5$** and **$X^6$** are a halogen atom;

(e) ion exchange resins which have groups which are selected from quaternary ammonium salt groups of the general formula $R^3R^4{}_3NX^3$ and quaternary phosphonium salt groups of the general formula $R^5R^6{}_3PX^4$, which are bonded to the ion exchange resin skeleton via the divalent groups $R^3$ and $R^5$, and imidazolium salt groups, in which

**$R^3$** and **$R^5$** are divalent alkyl radicals having 1 to 20 carbon atoms, which may be interrupted by -O-, -CO- or -OCO-O- groups and
**$R^4$** and **$R^6$** have the meanings of **$R^1$** and **$R^2$** and
**$X^3$** and **$X^4$** have the meanings of **$X^1$** and **$X^2$;**

(f) heterogeneous catalysts which comprise inorganic heterogeneous supports on whose surface salts are fixed which are selected from the above quaternary ammonium salts (a), quaternary phosphonium salts (b), imidazolium salts (c) and pyridinium salts (d);
(g) heterogeneous catalysts which comprise inorganic heterogeneous supports on whose surface groups are fixed which are selected from quaternary ammonium salt groups of the above general formula $R^3R^4{}_3NX^3$ and quaternary phosphonium salt groups of the general formula $R^5R^6{}_3PX^4$, which are bound to the heterogenous support via the divalent groups **$R^3$** and **$R^5$** and imidazolium and pyridinium groups which are bound to the heterogeneous support via divalent groups;
(h) ionic liquids, namely low-melting salts of quaternary ammonium, quaternary phosphonium, pyridinium and imidazolium salts.

**4.** Process according to any of Claims 1 to 3, in which the comproportionation is carried out continuously in a tubular reactor or in a bubble column.

## Revendications

1. Procédé de préparation d'organylhydrogénosilanes, dans lequel une réaction de comproportionation choisie parmi les équations (3), (4) et (5),

$$R_aSiCl_{4-a} + SiH_2Cl_2 \text{ --- > } R_aSiHCl_{3-a} + SiHCl_3 \quad (3),$$

$$2\ R_aSiCl_{4-a} + SiH_3Cl \text{ ---> } 2\ R_aSiHCl_{3-a} + SiHCl_3 \quad (4),$$

$$3\ R_aSiCl_{4-a} + SiH_4 \text{ ---> } 3\ R_aSiHCl_{3-a} + SiHCl_3 \quad (5),$$

est effectuée en présence d'un catalyseur qui renferme au moins un motif ammonium ou phosphonium substitué de façon totalement organique, où

R représente un radical alkyle, un radical aryle ou un radical alkaryle éventuellement halogéno-substitué, et a vaut 1, 2 ou 3.

2. Procédé selon la revendication 1, dans lequel le radical R est un radical méthyle.

3. Procédé selon la revendication 1 ou 2, dans lequel le catalyseur est choisi parmi :

(a) des sels d'ammonium quaternaires de formule générale $R^1{}_4NX^1$ ;
(b) des sels de phosphonium quaternaires de formule générale $R^2{}_4PX^2$ ;
(c) des sels d'imidazolium de formule générale

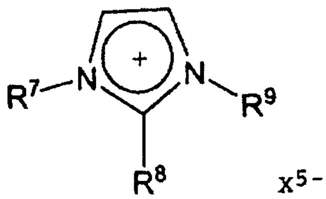

et
(d) des sels de pyridinium de formule générale

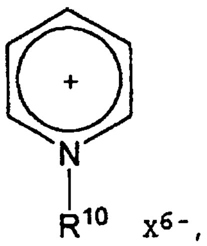

dans lesquelles :

**$R^1$, $R^2$, $R^7$, $R^9$ et $R^{10}$** présentent un radical hydro-carboné éventuellement halogéno-substitué, renfermant éventuellement des hétéroatomes,
**$R^8$** présente un atome d'hydrogène et les significations de **$R^1$, $R^2$, $R^7$, $R^9$** et **$R^{10}$**, et
**$X^1$, $X^2$, $X^5$** et **$X^6$** représentent un atome d'halogène ;

(e) des résines échangeuses d'ions qui présentent des groupes qui sont choisis parmi des groupes sels d'ammonium quaternaires de formule générale $R^3R^4{}_3NX^3$ et des groupes sels de phosphonium quaternaires de formule générale $R^5R^6{}_3PX^4$, qui sont liés au squelette de résine échangeuse d'ions par l'intermédiaire des

groupes bivalents **$R^3$** et **$R^5$,** et des groupes sels d'imidazolium, où

> **$R^3$** et **$R^5$** représentent des radicaux alkyle bivalents renfermant de 1 à 20 atomes de carbone, qui peuvent être **interrompus** par des groupes -O-, -CO- ou -OCO-O-, et
> **$R^4$** et **$R^6$** présentent les significations de **$R^1$** et **$R^2$,** et
> **$X^3$** et **$X^4$** présentent les significations de **$X^1$** et **$X^2$ ;**

(f) des catalyseurs hétérogènes qui comprennent des supports hétérogènes inorganiques aux surfaces desquels sont fixés des sels qui sont choisis parmi les sels d'ammonium quaternaires (a), les sels de phosphonium quaternaires (b), les sels d'imidazolium (c) et les sels de pyridinium (d) ci-dessus ;
(g) des catalyseurs hétérogènes qui comprennent des supports hétérogènes inorganiques aux surfaces desquels sont fixés des groupes qui sont choisis parmi des groupes sels d'ammonium quaternaires de formule générale $R^3R^4{}_3NX^3$ ci-dessus et des groupes sels de phosphonium quaternaires de formule générale $R^5R^6{}_3PX^4$, qui sont liés au support hétérogène par l'intermédiaire des groupes bivalents **$R^3$** et **$R^5$,** et des groupes imidazolium et pyridinium qui sont liés au support hétérogène par l'intermédiaire de groupes bivalents ;
(h) des liquides ioniques, à savoir des sels à faibles points de fusion parmi des sels d'ammonium quaternaires, des sels de phosphonium quaternaires, des sels de pyridinium et des sels d'imidazolium.

**4.** Procédé selon les revendications 1 à 3, dans lequel la comproportionation est effectuée en continu dans un réacteur tubulaire ou dans une colonne à bulles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9931111 A
- DE 19520737 A
- DE 2132335 A
- DE 1264442 A
- US 4605543 A
- EP 776698 A
- EP 286074 A
- DE 10157198 A


### In der Beschreibung aufgeführte Nicht-Patentliteratur


- **HOUBEN-WEYL.** Houben-Weyl. Georg Thieme Verlag, 1963, vol. XII/1, 79-90